# EUROPEAN PATENT APPLICATION

(11) **EP 3 043 613 A1**
(43) Date of publication of application: **13.07.2016**
(21) Application number: 14842278.5
(22) Date of filing: 29.08.2014
(51) Int. Cl.: H04W 72/04, H04W 8/00, H04W 64/00, H04W 84/18

(54) **USER EQUIPMENT, BASE STATION, INFORMATION NOTIFICATION METHOD, AND RESOURCE ALLOCATION METHOD**

(30) Priority: 06.09.2013 JP 2013184950; 11.12.2013 JP 2013256309
(71) Applicant: NTT DOCOMO, INC., Chiyoda-ku Tokyo 100-6150 (JP)
(72) Inventor: NAGATA, Satoshi, Tokyo 100-6150 (JP); KUSUME, Katsutoshi, 80687 Munich (DE); HU, Liang, 80687 Munich (DE)
(74) Representative: Hoffmann Eitle
(86) International application number: PCT/JP2014/072739
(87) International publication number: WO 2015/033870

(57) **Abstract**

A user apparatus including a function configured to perform device-to-device communication by radio, including: a data storage unit configured to store identification information corresponding to the user apparatus; an identification information obtaining unit configured to receive, from another user apparatus, a discovery signal including identification information corresponding to the other user apparatus, and to obtain the identification information corresponding to the other user apparatus from the discovery signal; and a control signal transmission unit configured to transmit a control signal including the identification information corresponding to the other user apparatus to a base station.

## Description

### TECHNICAL FIELD

The present invention relates to terminal-to-terminal communication (D2D communication, device-to-device communication). More particularly, the present invention relates to a technique for assigning a radio resource (to be referred to as resource hereinafter) for transmitting a discovery signal in the terminal-to-terminal communication.

### BACKGROUND ART

In a mobile communication system, it is common that a terminal (to be referred to as "user apparatus UE" hereinafter) and a base station eNB perform communication so that communication is performed between user apparatuses UE. However, in recent years, various techniques are considered for performing direct communication between user apparatuses UE.

When performing communication between user apparatuses UE, it is necessary that a user apparatus UE discovers another neighboring user apparatus UE. As a method for discovering a user apparatus UE, there is a method in which each user apparatus UE transmits (broadcasts) a discovery signal including its own ID (identification information).

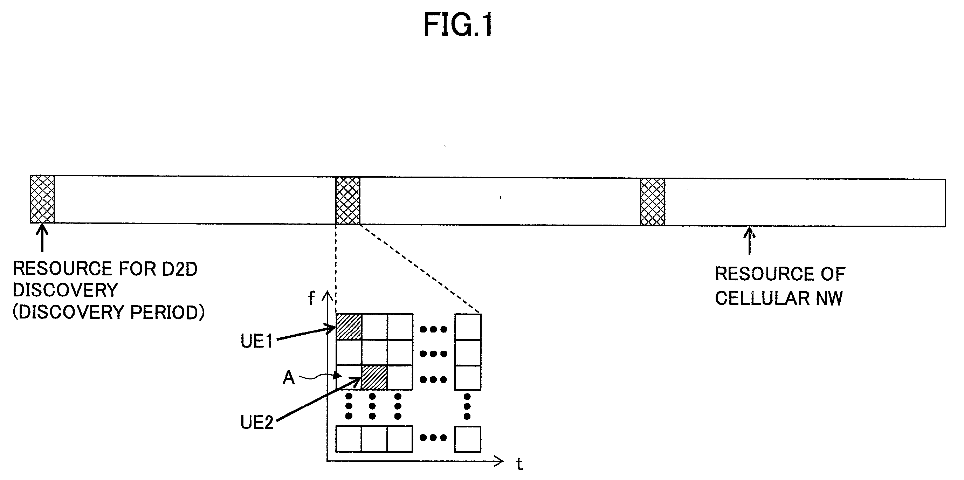

Fig. 1 is a diagram showing an example of a resource for transmitting a discovery signal. In the example of Fig. 1, it is defined that a discovery period, for performing discovery (and being discovered) of a user apparatus UE by transmitting and receiving a discovery signal, comes periodically. In each discovery period, a predetermined number of resources (each being a time-frequency resource, which is to be referred to as "discovery resource") for transmitting (and receiving) a discovery signal are defined. Each user apparatus UE transmits a discovery signal by using a discovery resource in the discovery period.

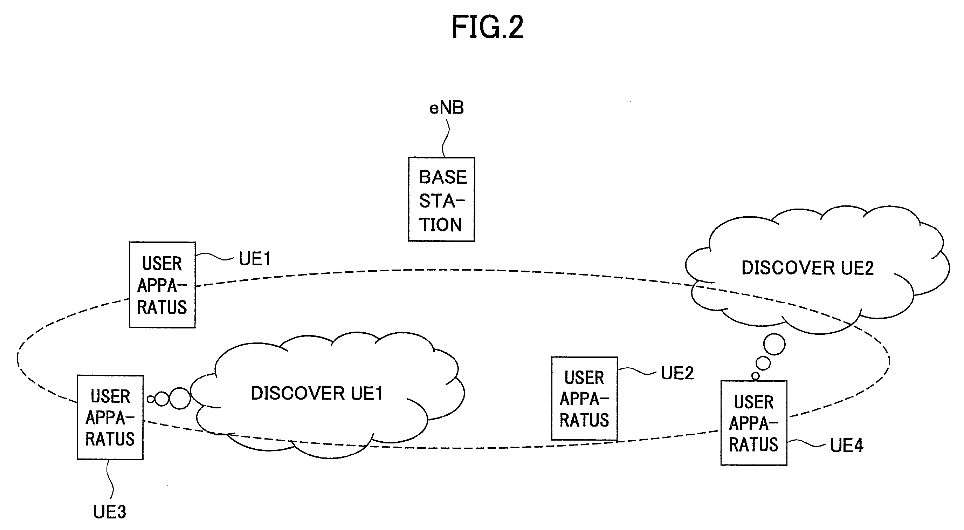

For example, a user apparatus UE1 of Fig. 2 transmits a discovery signal using a discovery resource indicated by UE1 of Fig. 1, a user apparatus UE2 of Fig. 2 transmits a discovery signal using a discovery resource indicated by UE2 of Fig. 1.

A user apparatus UE3 in Fig. 2 discovers the user apparatus UE1 by receiving a discovery signal transmitted by the user apparatus UE1, and a user apparatus UE4 discovers the user apparatus UE2 by receiving a discovery signal transmitted by the user apparatus UE2.

There are roughly two methods as methods for selecting a discovery resource in each user apparatus UE. One is a method in which each user apparatus UE arbitrarily selects a discovery resource from among usable discovery resources. This method is called distributed type (distributed discovery). Another one is a method in which the base station eNB assigns respective discovery resources to user apparatuses UE. This method is called centralized type (centralized discovery).

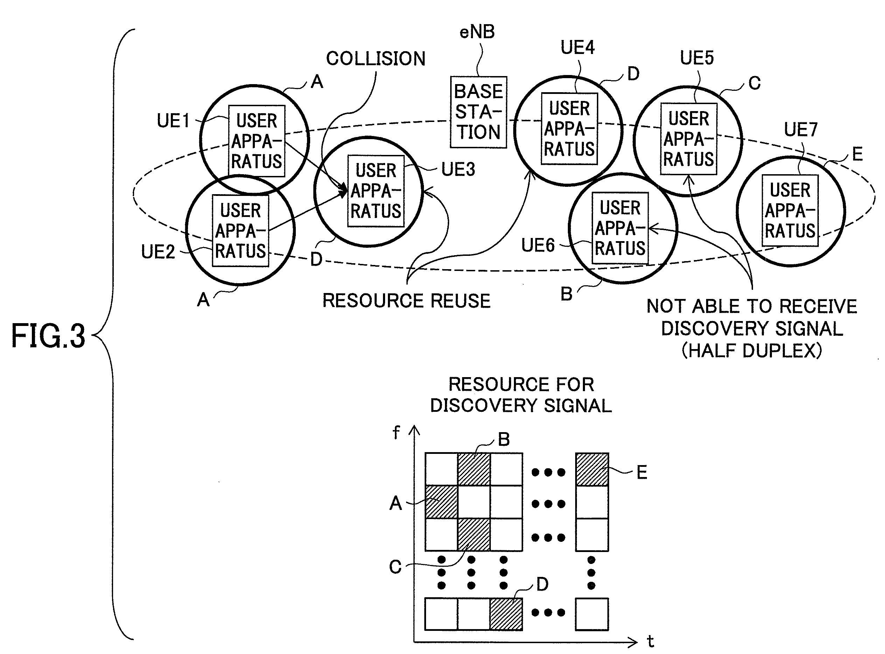

Fig. 3 is a diagram showing an example of transmission and reception of a discovery signal in the distributed type. In Fig. 3, each user apparatus UE uses a discovery resource indicated by each reference symbol. For example, the user apparatus UE1 and the user apparatus UE2 transmit a discovery signal using a discovery resource indicated by A in the resource diagram in the right side.

As shown in Fig.3, the user apparatuses UE1, UE2 and UE3 are located at a close distance with each other, and the user apparatuses UE1 and UE2 transmit a discovery signal using the same resource A. Thus, collision of discovery signals occurs, so that the user apparatus UE3 cannot discover any of the user apparatuses UE1 and UE2. Also, since the user apparatus UE3 and the user apparatus UE4 are far apart, these can use the same discovery resource D (spatial reuse, spatial reuse of resources).

As a prior art document on terminal-to-terminal communication, there is a patent document 1. Also, as prior art documents on after-mentioned radio fingerprint (RFP), there are non-patent documents 1-3, for example.

### RELATED ART DOCUMENT

### [PATENT DOCUMENT]

[PATENT DOCUMENT 1] JP2012-209893

### [NON-PATENT DOCUMENT]

[NON-PATENT DOCUMENT 1] H. Laitinen et al., "Experimental Evaluation of Location Methods Based on Signal-Strength Measurements," IEEE Trans. Vehic. Tech., vol. 56, no. 1, Jan. 2007, pp. 287-96.
[NON-PATENT DOCUMENT 2] J. Johansson et al., "Minimization of Drive Tests in 3GPP Release 11," IEEE Commun. Mag Nov. 2012.
[NON-PATENT DOCUMENT 3] Athul Prasad et al, " Energy Efficient Small-Cell Discovery Using Received Signal Strength Based Radio Maps", IEEE VTC, June 2013

### SUMMARY OF THE INVENTION

### PROBLEM TO BE SOLVED BY THE INVENTION

In the case of the centralized type, resources can be assigned in a centralized manner such that the above-mentioned collision does not occur. However, there is a problem in that resource spatial reuse cannot be performed unless there is information on positions and like of user apparatuses UE.

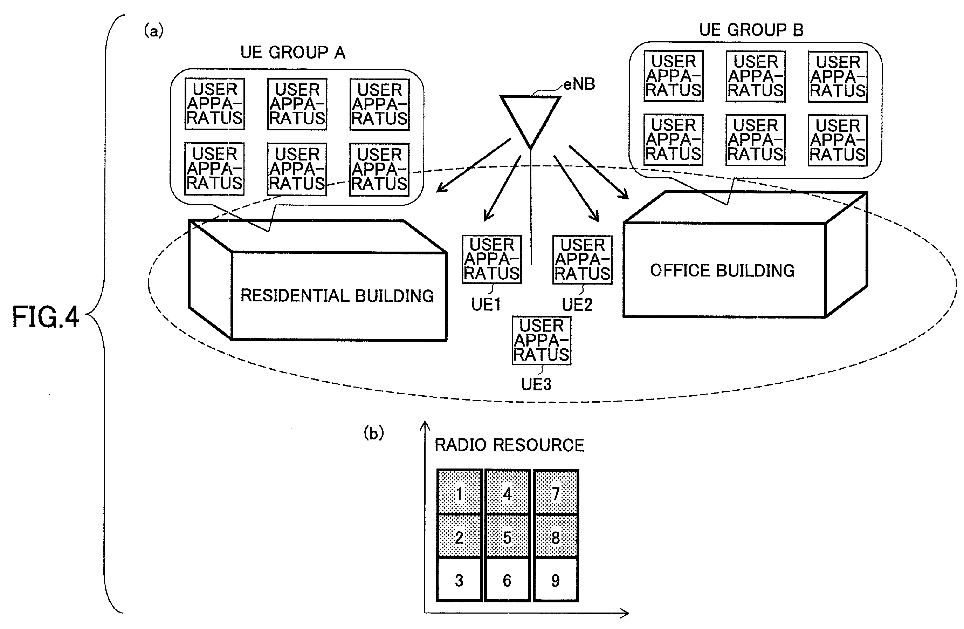

As an example, in a radio environment shown in Fig. 4(a), a case is considered in which the base station eNB assigns resources 1-9 shown in Fig. 4(b) to a UE group A and a UE group B which are groups of user apparatuses UE and to individual user apparatuses UE1-UE3.

If the UE group A and the UE group B are separated sufficiently so that any discovery signal transmitted from user apparatuses UE belonging to a group cannot be received by any of user apparatuses UE belonging to another group, the base station eNB can perform resource reuse between the UE group A and the UE group B so as to assign 6 resources shown as shaded parts in Fig. 4 (b) to each of the UE group A and the UE group B, for example. That is, each of the UE group A and the UE group B can use 6 resources simultaneously. Remaining 3 resources are assigned to the user apparatuses UE1-UE3.

For performing the above-mentioned assignment, it is necessary that the base station eNB knows that the UE group A and the UE group B are sufficiently separated, or, that a discovery signal cannot be transmitted and received between the UE group A and the UE group B. In order to know such a radio propagation state between UEs by the base station eNB, for example, it can be considered that each user apparatus UE notifies the base station eNB of its own position by GPS so that the base station eNB calculates distance between UEs to estimate the radio propagation state based on the distance. However, in the method for estimating radio propagation state based on positons of user apparatuses UE using GPS, there is a problem, for example, that, when a user apparatus UE exists in a building, radio propagation state cannot be estimated accurately between the user apparatus UE and a user apparatus UE outside the building. Therefore, in such a method based on a distance, there is a case where spatial reuse cannot be performed efficiently, that is, for example, resources are assigned without spatial reuse even though spatial reuse of the resources is available.

The present invention is contrived from the viewpoint of the above-mentioned points, and an object of the present invention is to provide a technique that enables proper spatial reuse of resources in resource assignment for terminal-to-terminal communication.

### MEANS FOR SOLVING THE PROBLEM

According to an embodiment of the present invention, there is provided a user apparatus including a function configured to perform device-to-device communication by radio, including:
a data storage unit configured to store identification information corresponding to the user apparatus;
an identification information obtaining unit configured to receive, from another user apparatus, a discovery signal including identification information corresponding to the other user apparatus, and to obtain the identification information corresponding to the other user apparatus from the discovery signal; and
a control signal transmission unit configured to transmit a control signal including the identification information corresponding to the other user apparatus to a base station.

According to an embodiment of the present invention, there is provided a base station configured to communicate with a user apparatus that includes a function configured to perform device-to-device communication by radio, including:
a spatial coupling information reception unit configured to receive, from each user apparatus of a plurality of user apparatuses, spatial coupling information including identification information that is included in a discovery signal received by the user apparatus and that corresponds to another user apparatus; and
a resource assignment unit configured to determine availability of discovery signal communication between areas where user apparatuses exist based on the spatial coupling information, and to assign a resource for discovery signal transmission to a user apparatus based on the availability of discovery signal communication.

### EFFECT OF THE PRESENT INVENTION

According to an embodiment of the present invention, there is provided a technique that enables proper spatial reuse of resources in resource assignment for terminal-to-terminal communication.

### BRIEF DESCRIPTION OF THE DRAWINGS

Fig. 1 is a diagram showing an example of a resource for transmitting a discovery signal;
Fig. 2 is a diagram for explaining D2D communication;
Fig. 3 is a diagram showing an example of transmission and reception of a discovery signal;
Fig. 4 is a diagram showing an example of resource assignment;
Fig. 5 is a diagram showing a configuration example of a communication system in an embodiment of the present invention;
Fig. 6 is a diagram for explaining a resource configuration example;
Fig. 7 is a diagram showing examples of RG patterns;
Fig. 8 is a diagram showing that a user apparatus UE-A obtains RFP;
Fig. 9 is a diagram showing an example of an RFP·area mapping table;
Fig. 10 is a diagram showing each area corresponding to an area ID;
Fig. 11 is a diagram for explaining an outline of operation;
Fig. 12 is a diagram showing an example of a spatial coupling matrix;
Fig. 13 is a sequence diagram showing a process procedure in an embodiment of the present invention;
Fig. 14 is a diagram for explaining process content in step 100 in a case where the number of base stations eNB of measurement targets is 4;
Fig. 15 is a diagram for explaining an operation example in step 100 when the user apparatus UE moves;
Fig. 16 is a diagram showing a concrete example of step 400;
Fig. 17 is a diagram showing a concrete example of step 500;
Fig. 18 is a diagram showing a concrete example of step 600;
Fig. 19 is a diagram showing a functional configuration example of a user apparatus UE;
Fig. 20 is a diagram showing a functional configuration example of a base station eNB.

### EMBODIMENTS FOR CARRYING OUT THE INVENTION

In the following, an embodiment of the present invention is described with reference to figures. The embodiment described below is merely an example, and the embodiment to which the present invention is applied is not limited to the embodiment below. For example, in the following embodiment, although an area ID is used as "identification information corresponding to user apparatus" of the present invention, this is merely an example, and an ID other than the area ID can be used as the identification information.

### (Whole configuration example)

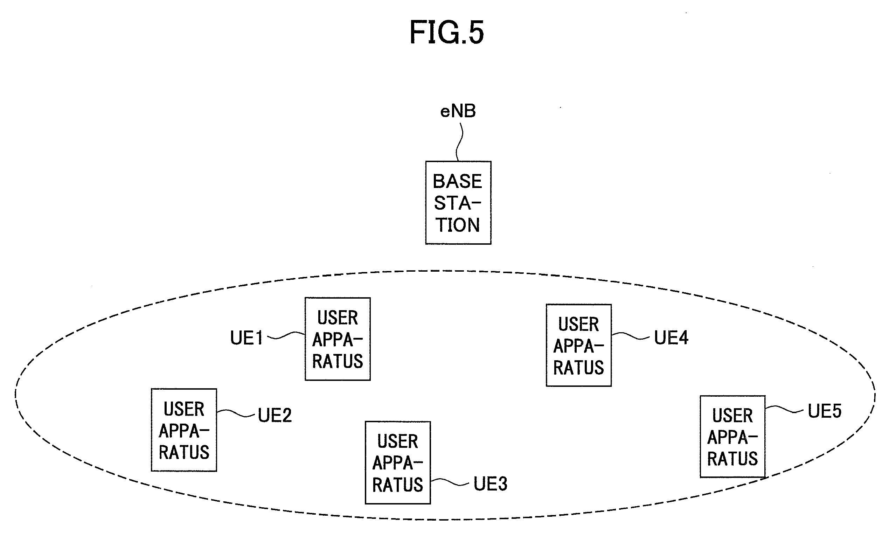

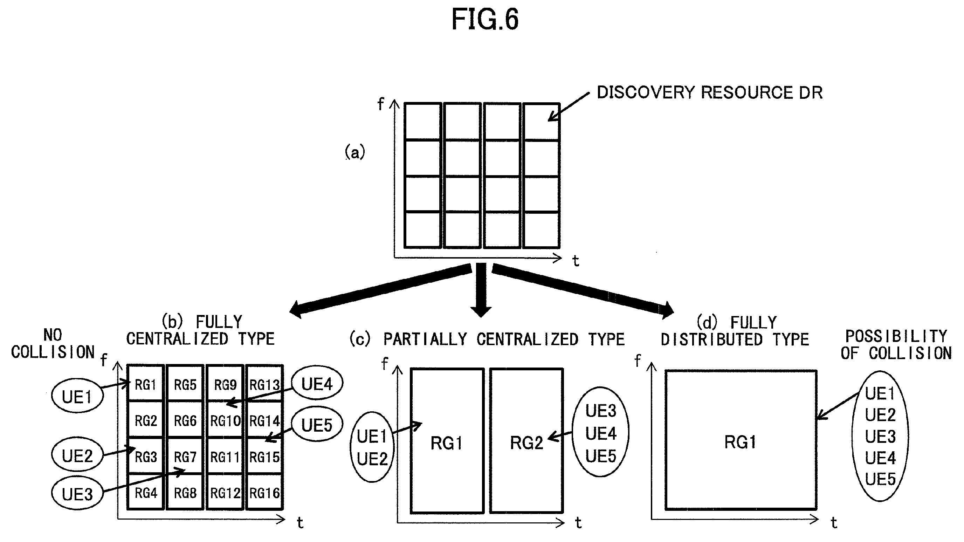

First, a whole configuration example of a communication system in an embodiment of the present invention is described with reference to Fig. 5 and Fig. 6. Fig. 5 shows a configuration example of a communication system in the present embodiment. As shown in Fig. 5, the communication system of the present embodiment is a cellular communication system in which a plurality of user apparatuses UE exist under the base station eNB. Although there are a plurality of surrounding base stations eNB actually, Fig. 5 shows one base station eNB. The cellular communication system complies with LTE, for example. However, the system is not limited to LTE. In the specification and the claims, the term "LTE" is used to mean not only a communication scheme corresponding to 3GPP release 8 or 9, but also a communication scheme corresponding to 3GPP release 10, 11, 12 or later release.

Fig. 6 is a diagram for explaining an example of resource configurations on discovery resources of the present embodiment. In the example shown in Fig. 6, as an example for making the explanation easy to understand, as shown in Fig. 6(a), it is assumed that 4x4=16 discovery resources (DR: discovery resource) are usable in one discovery signal transmission occasion (discovery period). One discovery resource DR is a minimum unit of resource used by a user apparatus UE for transmitting a discovery signal. For example, the discovery resource DR consists of a plurality of RBs (resource blocks) defined in LTE.

In the example shown in Fig. 6, a plurality of resource group (RG: Resource Group) patterns are introduced. One RG pattern includes one resource group or a plurality of resource groups RGs. One resource group RG includes one discovery resource DR or a plurality of discovery resources DRs. The user apparatus UE is assigned a RG pattern and a resource group RG that should be used in the RG pattern. This assignment is performed by a signaling from the base station eNB, for example. Also, there is a case in which assignment of a resource group RG is performed as an assignment of a hopping pattern of a resource group RG.

Then, the user apparatus UE arbitrarily (randomly, for example) selects one discovery resource DR from among one or a plurality of discovery resources DR in the assigned resource group RG so as to use it for transmitting a discovery signal. In a case where the resource group RG includes only one discovery resource DR, assignment of a resource group RG becomes assignment of a discovery resource DR as it is.

Fig. 6 shows three RG patterns as an example. The RG pattern shown in Fig. 6(b) is a pattern in which each of the resource groups RGs which form the RG pattern is one discovery resource DR. As mentioned above, this pattern corresponds to a case where each resource group RG includes only one discovery resource DR, and assignment of resource group RG becomes assignment of discovery resource DR as it is. As an example, Fig. 6(b) shows an assignment example of user apparatuses UE1-UE5 shown in Fig. 5. In the case of this pattern, assignment becomes the same as that of the beforementioned centralized type as a result. Thus, this pattern can be called a fully centralized type.

The RG pattern shown in Fig. 6(c) is a pattern in which the discovery resource whole region is divided into two resource groups (RG1 and RG2). As shown in Fig. 6(c), user apparatuses UE1 and UE2 are assigned to RG1, and user apparatuses UE3, UE4 and UE5 are assigned to RG2. In the case of assignment shown in Fig. 6(c), for example, as to the user apparatus UE1, the RG pattern shown in Fig. 6(c) is assigned, and further, RG1 in the RG pattern is assigned.

The RG pattern shown in Fig. 6(c) is the centralized type in a point that one RG is assigned to a user apparatus UE from among a plurality of RGs, and the RG pattern shown in Fig. 6(c) is also the distributed type in a point that the user apparatus UE arbitrarily selects one discovery resource DR from among a plurality of discovery resources DR included in the RG. Thus, such a RG pattern can be called as a partially distributed type.

The RG pattern shown in Fig. 6(d) is a pattern in which only one resource group RG (RG1) is included in the RG pattern. In this case, 16 discovery resources DR shown in Fig. 6(a) are included in RG1, and each user apparatus UE selects one discovery resource DR from among 16 discovery resources DR to transmit a discovery signal. In this pattern, assignment becomes the same as that of the distributed type as a result. Thus, this pattern can be called a fully distributed type.

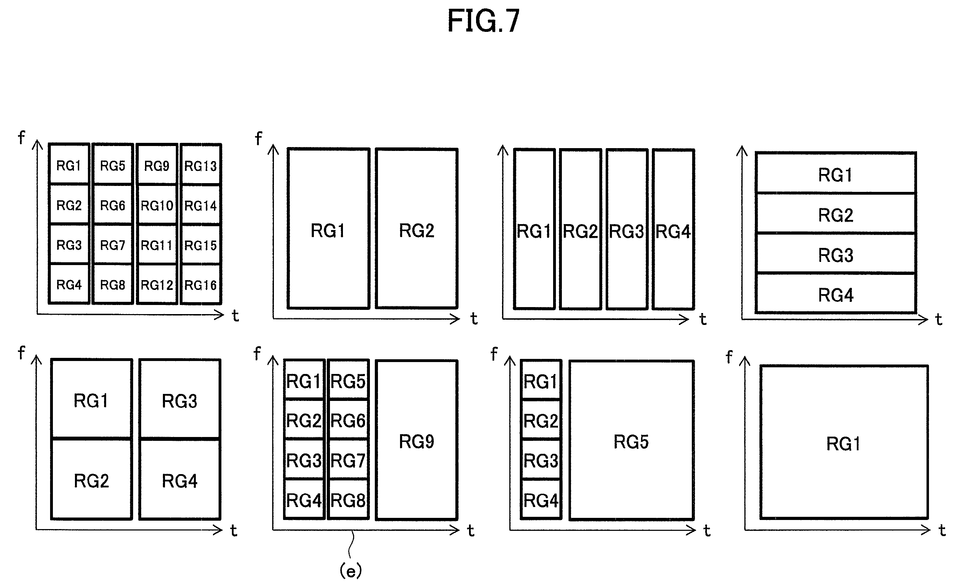

RG patterns are not limited to the above-mentioned particular patterns, and any RG pattern can be introduced. Examples of a plurality of RG patterns including the examples of RG patterns shown in Fig. 6 are shown in Fig. 7.

In the present embodiment, since spatial reuse of resources is performed. Thus, for example, in the example shown in Fig. 6(c), if transmission and reception of a discovery signal are not performed in a radio propagation environment between the group of UE1-UE2 and the group of UE3-UE5, the base station eNB determines that state based on an after-mentioned spatial coupling matrix so as to be able to assign the same RG (example : RG1) to each user apparatuses of the group of UE1-UE2 and the group of UE3-UE5. In this case, since RG2 can be assigned to another user apparatus UE, efficient utilization of resources can be realized.

### (Outline of the embodiment of the present invention)

In the following, an outline of an embodiment is described.

### <On radio fingerprint>

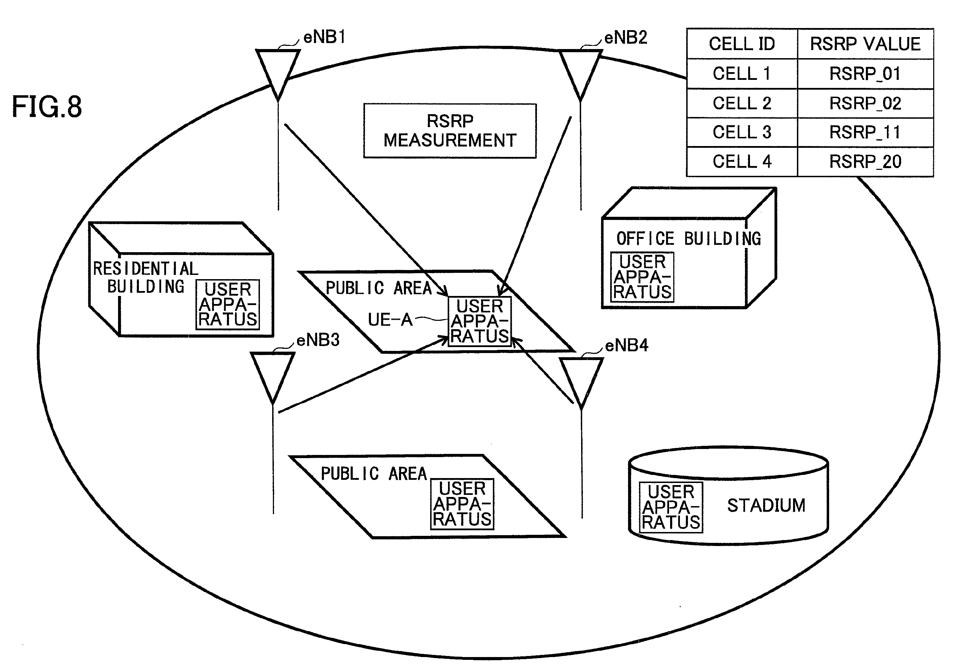

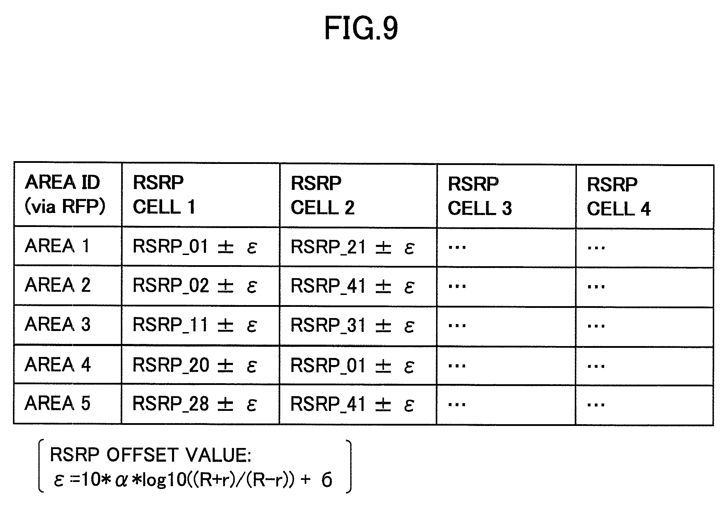

In the present embodiment, the base station eNB uses a radio fingerprint (RFP) technique for determining an area ID associated with a position of a user apparatus UE. First, an outline of the radio fingerprint technique used in the present embodiment is described with reference to Fig. 8 and Fig. 9.

Fig. 8 is a diagram indicating that there are base stations (macro base stations) eNB1-eNB4 around a user apparatus UE-A, and that the user apparatus UE-A obtains an RFP. Although each user apparatus calculates an RFP in the present embodiment, Fig. 8 is a diagram especially focusing on the user apparatus UE-A.

As shown in Fig. 8, the user apparatus UE-A measures received power (RSRP: Reference Signal Received Power in the present embodiment) of a signal such as a reference signal and the like for each of the base stations eNB1-eNB4. Also, the user apparatus UE-A receives a cell ID from each base station eNB, and generates information, as the RFP, in which cell ID is associated with RSRP, to transmit the RFP to a residing base station eNB.

The base station eNB generates and holds an RFP·area mapping table in which an RFP is associated with an area ID as shown in Fig. 9 based on RFPs received from each user apparatus UE. After generating the RFP·area mapping table, when the base station eNB receives an RFP from a user apparatus UE, for example, and when there is an entry (row of the RFP·area mapping table) that matches the RFP, the base station eNB determines that an area ID in the row is an area ID of the user apparatus UE. Since an RFP is associated with a position of a user apparatus UE, one which is identified from the RFP is called "area" for convenience sake.

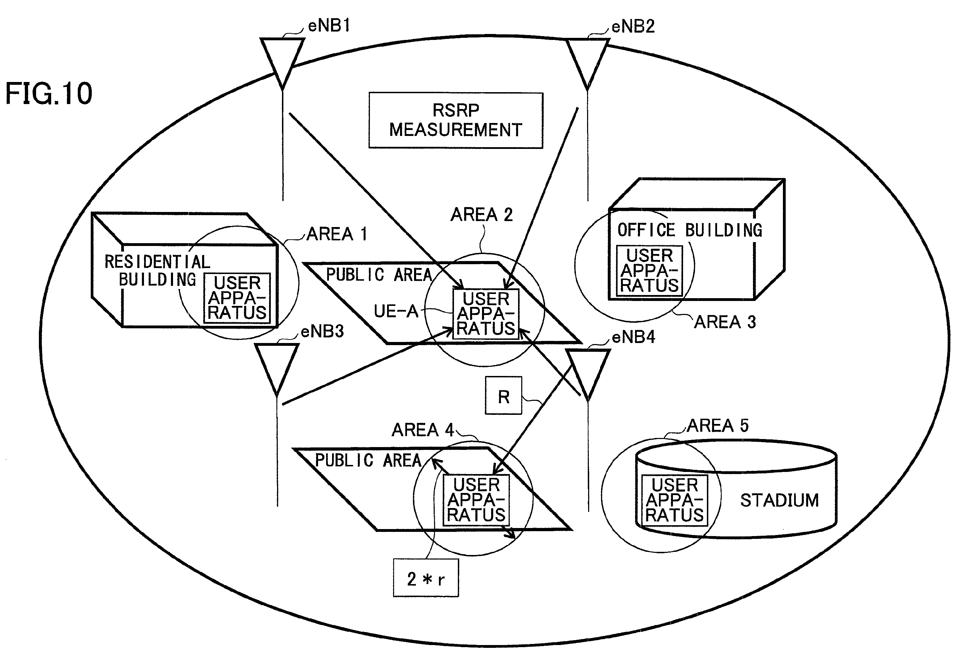

By comparing, for each cell, RSRP that forms the RFP received from the user apparatus UE with RSRP in the RFP·area mapping table, when RSRP forming the RFP is within a predetermined range (offset) with respect to RSRP in the RFP·area mapping table in each cell, entry match occurs. In Fig. 9, the offset is indicated as ε. The method for determining ε is not limited to a particular method. For example, ε may be a predetermined constant, or may be obtained by a formula shown in Fig. 9. In the formula, α is a predetermined constant, R is a distance between the base station eNB of the cell and the user apparatus UE, and r is a radius of the area. Examples of R and r are also shown in Fig. 10. Fig. 10 is a diagram showing each area corresponding to area IDs shown in Fig. 9.

For example, each base station eNB performs inter-base station communication with surrounding base stations eNB to exchange an RFP· area mapping table with the surrounding base stations eNB so that each base station eNB can hold a common RFP·area mapping table. In the following, it is assumed that each base station eNB holds a common RFP·area mapping table.

### <Outline of operation>

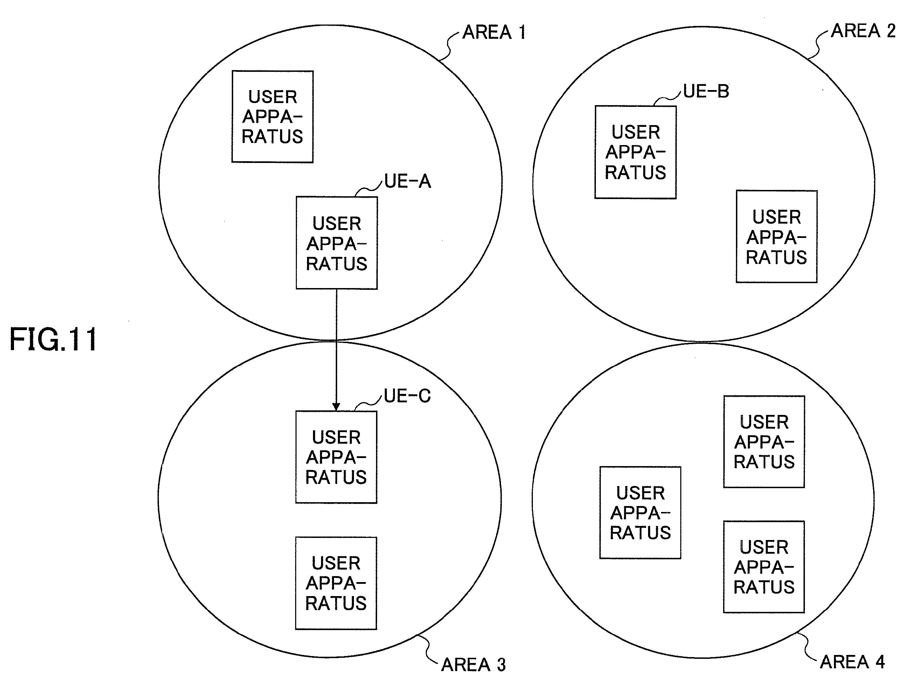

Next, an outline of operation of the system of the present embodiment is described. The operation of the present embodiment is divided to operation 1 for RFP·area mapping table construction and area ID notification, and operation 2 for spatial coupling matrix construction and resource assignment.
(Operation 1) In the operation 1, the user apparatus UE reports an RFP (RSRP vector) to the base station eNB, and the base station eNB performs comparison between the RFP and the RFP·area mapping table. Then, when the RFP is a new RFP, the base station eNB adds an entry of an area ID and the RFP, and when the RFP is an existing RFP, the base station eNB reports, to the user apparatus UE, an area ID corresponding to the RFP received from the user apparatus UE. Also, in order to keep accuracy of report of RFP from user apparatuses UE, the base station eNB may report, to user apparatuses UE, the number of surrounding base stations that should be measured.
(Operation 2) The operation 2 is described with reference to Fig. 11 as necessary. Fig. 11 shows area IDs of each area. For example, an area ID held by the user apparatus UE-A is 1, and an area ID held by the user apparatus UE-B is 2.

In the operation 2, the base station eNB ascertains whether transmission and reception of a discovery signal between user apparatuses UE are performed between areas based on reports from user apparatuses UE so as to generate a spatial coupling matrix indicating availability of discovery signal communication between areas, and to perform resource assignment including resource spatial reuse based on the information. An outline of processing in the operation 2 is as follows.
Step 1) Each user apparatus UE includes its own area ID into a discovery signal, and transmits the discovery signal. The discovery signal is received by another user apparatus UE. For example, the user apparatus UE-A shown in Fig. 11 transmits a discovery signal including 1 as an area ID, and a user apparatus UE-C receives the discovery signal. This indicates that communication is available between an area of area ID : 1 and an area of area ID : 3. Information including UE's own area ID and an area ID included in a received discovery signal is called spatial coupling information. It may be possible that information including the own area ID and the area ID included in the received discovery signal is called spatial coupling information when the own area ID is different from the area ID included in the discovery signal.
Step 2) Each user apparatus UE transmits spatial coupling information to the base station eNB. It is not necessarily essential that the user apparatus UE transmits both of its own area ID and an area UD included in a received discovery signal as spatial coupling information. As spatial coupling information, the user apparatus UE may transmit an area ID included in a received discovery signal without transmitting its own area ID. In this case, for example, the base station eNB can ascertain an area ID of a user apparatus UE of transmission source of the spatial coupling information by holding the area ID reported in operation 1 for each user apparatus UE of report destination.
Step 3) The base station eNB constructs a spatial coupling matrix by using the spatial coupling information received from each user apparatus UE.

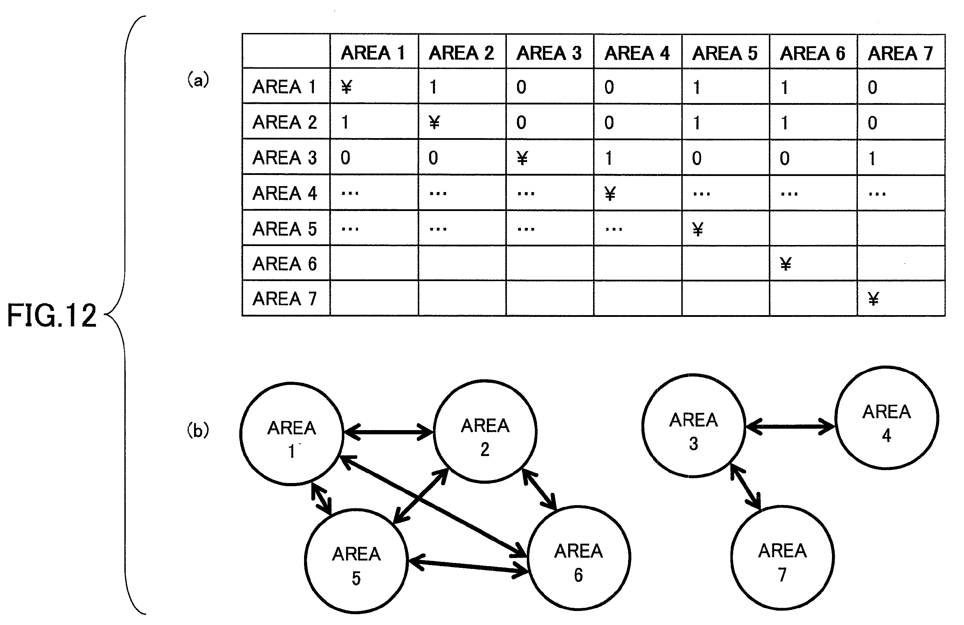

Fig. 12 (a) shows an example of the spatial coupling matrix. In the example of Fig. 12(a), 1 is set between areas in which communication of a discovery signal is performed, and 0 is set between areas in which communication of a discovery signal is not performed. For example, the example of Fig. 12(a) shows that discovery signal communication from an area 1 to an area 2 is performed, and further, discovery signal communication from the area 2 to the area 1 is performed. In the present embodiment, when it can be determined that a discovery signal transmitted from an area is received by another area based on the spatial coupling matrix, it may be determined that communication is available between the areas. Alternatively, when it can be determined, based on the spatial coupling matrix, that a discovery signal transmitted from an area is received by another area and further that a discovery signal transmitted from the other area is received by the area, it may be determined that communication is available between the areas.

Fig. 12(b) shows a connection relationship example between areas obtained from the spatial coupling matrix. In the example shown in Fig. 12(b), for example, since communication cannot be performed between an area 2 and an area 3, the base station eNB can determine to assign a resource (DR, RG and the like), the same as one assigned to user apparatuses UE belonging to the area 2, to the area 3. That is, the same resource can be assigned to areas between which discovery signal communication is not performed.

Each base station eNB exchanges the spatial coupling matrix with surrounding base stations eNB via the X2 interface, for example, so as to be able to construct a spatial coupling matrix more accurately especially in an area of a cell edge.

In the operation 2 of the present embodiment, the transmission side includes, in a discovery signal, an area ID obtained based on the operation 1 as identification information, and transmits the discovery signal, then the receiving side transmits information including the identification information to the base station eNB. However, the identification information that is transmitted by being included in the discovery signal and that is transmitted to the base station eNB by the receiving side is not limited to the area ID. For example, an ID of the residing cell, or other IDs corresponding to the user apparatus UE may be used.

### (Details of process procedure in an embodiment)

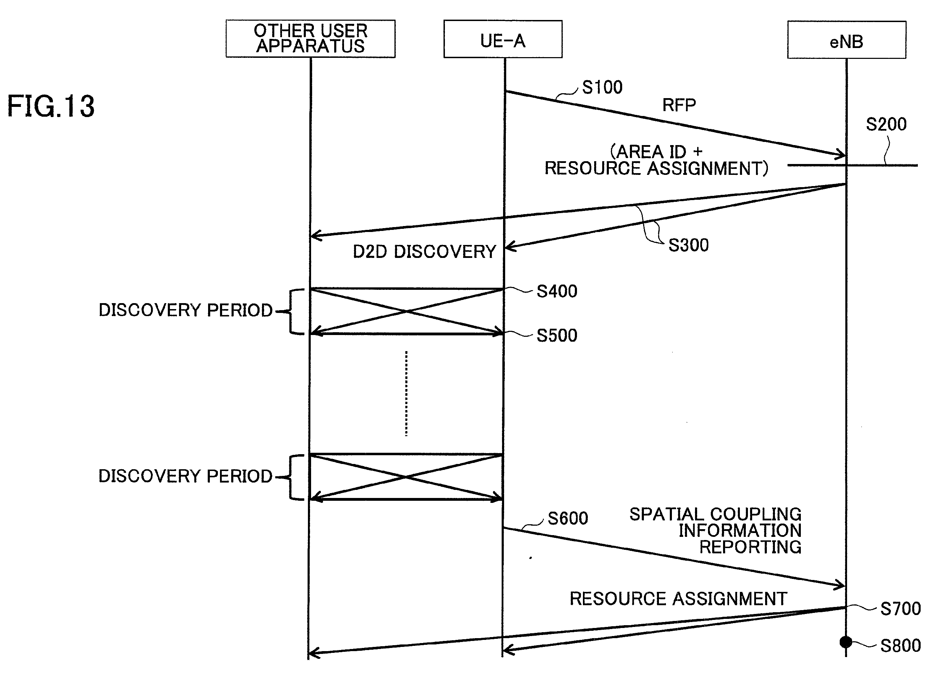

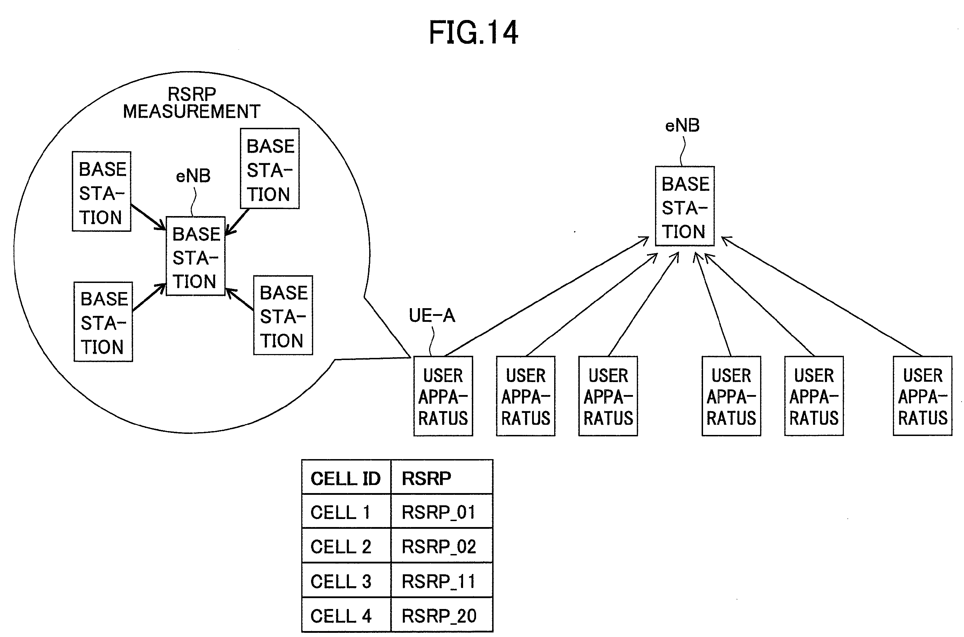

In the following, a process procedure in an embodiment of the present invention is described in detail. Fig. 13 is a sequence diagram showing a whole operation example of the system, and indicates a state in which there are a user apparatus UE-A newly residing in the base station eNB and another user apparatus UE. Process content of each procedure is described along with the procedure shown in Fig. 13. In the description, Figs. 14-18 are referred to as necessary.

### <Step 100: RSRP measurement, reporting>

In step 100 of Fig. 13, the user apparatus UE-A measures RSRP of signals from a predetermined number of base stations eNB, and reports, to the base station eNB, the values and corresponding cell IDs as an RFP. For the reporting, for example, a user apparatus UE specific uplink signaling channel (control signal) such as PUSCH, PUCCH can be used. Also, RFP may be reported to the base station eNB by using an existing RRC signaling defined in handover of LTE.

Process content of step 100 in a case when the number of base stations eNB of measurement targets are 4 is shown in Fig. 14. Although Fig. 14 shows that each user apparatus UE reports an RFP to the base station eNB, it is shown that the number of base stations eNB for measurement is 4 for the user apparatus UE-A for convenience sake.

As shown in the table below the user apparatus UE-A in Fig. 14, the user apparatus UE-A measures RSRP of signals from each base station eNB, and reports an RSRP vector including the 4 values to the base station eNB as an RFP.

A signal (frame) for reporting is formed by 2x4 bits for cell ID and 2x4 bits for RSRP, for example.

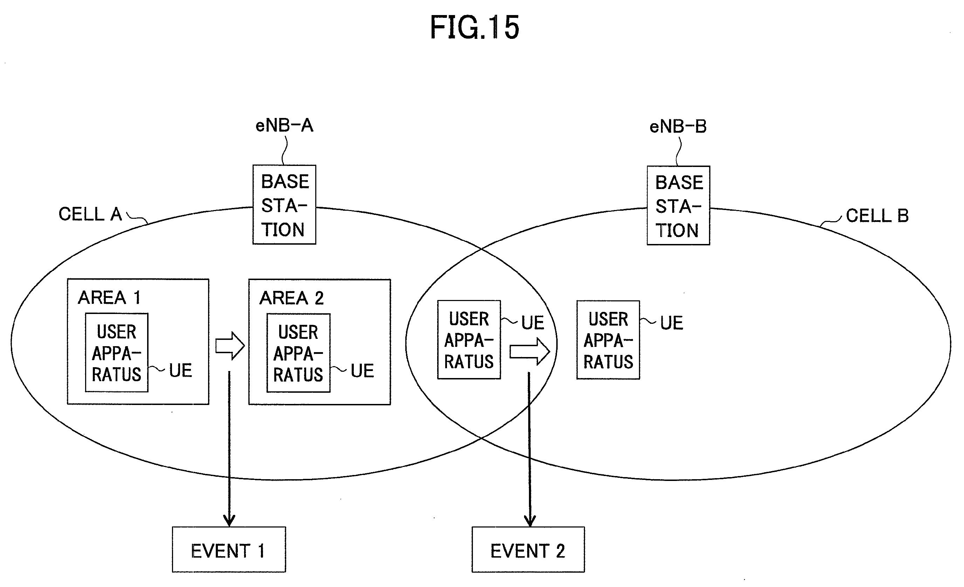

An operation example in step 100 in a case where the user apparatus UE moves is described with reference to Fig. 15.

In Fig. 15, "even 1" is shown as an event in which the user apparatus UE moves from an area 1 to an area 2, and "event 2" is shown as an event in which the user apparatus UE moves from a cell A of a base station eNB-A to a cell B of a base station eNB-B.

In the event 1 in which the user apparatus UE moves from the area 1 to the area 2, the user apparatus UE periodically measures RSRP, and reports an RFP to the base station eNB-A periodically. Then, the base station eNB-A determines whether the user apparatus UE is in the area 1 or in the area 2 based on the RFP, and transmits notification to the user apparatus UE.

In the event 2, in a stage where a cell in which the user apparatus UE resides changes (when the user apparatus UE is positioned at a cell edge of the cell A and the cell B), the user apparatus UE reports an RFP to both of the base station eNB-A and the base station eNB-B.

### <Step 200>

In step 200 of Fig. 13, the base station eNB determines whether the received RFP matches an entry in the RFP·area mapping table. When it matches an entry, the base station eNB assigns a first resource to the user apparatus UE for discovery signal transmission. As resource assignment, an RG is assigned for example.

In that case, for example, by referring to an already-generated spatial coupling matrix, a resource the same as a resource assigned to an area that does not communicate with an area of the user apparatus UE can be assigned. Also, a resource for assignment is a resource that is different from a resource assigned to an area that communicates with an area of the user apparatus UE. Such assignment can be solved by formulation as a graph coloring problem, for example. For enabling such an assignment, the base station eNB holds an assignment table in which an area ID is associated with a resource assigned to a user apparatus UE of the area.

When the RFP does not match any entry, the base station eNB updates the RFP·area mapping table by adding an entry including the received RFP and a new area ID to the RFP·area mapping table, and assigns a resource to the user apparatus UE.

User apparatuses UE other than the user apparatus UE-A also transmit, periodically, for example, an RFP to the base station eNB, so that the base station eNB determines an area ID, performs resource assignment, and reports them to the user apparatuses UE.

### <Step 300>

The base station eNB reports, to the user apparatus UE-A (and other user apparatuses UE), an area ID and an ID of an assigned resource. The area ID and the ID of the assigned resource may be reported separately. For the reporting, user apparatus UE specific downlink signaling such as downlink RRC signaling is used. Each user apparatus UE holds the received area ID. The ID of the resource is, for example, an ID of RG, an ID of DR and the like. Each user apparatus UE has a function for determining which resource (example: RB) to use for discovery signal transmission from the ID of RG, the ID of DR or the like, and transmitting a discovery signal by using the resource.

### <Step 400>

In step 400, the user apparatus UE-A includes its own area ID into a discovery signal, and transmits (broadcasts) the discovery signal. Transmission is performed periodically.

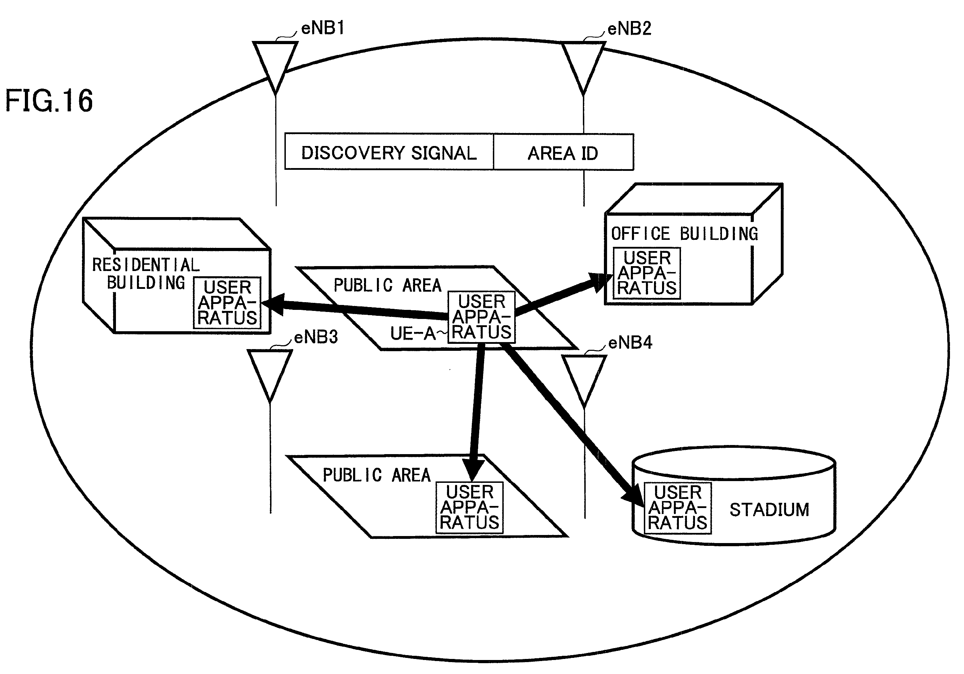

Fig. 16 is a diagram showing process content of step 400 more concretely. In the example shown in Fig. 16, a signal obtained by adding an area ID to an existing discovery signal is shown as a discovery signal of the present embodiment. As shown in Fig. 16, the user apparatus UE-A transmits a discovery signal so that other user apparatuses UE that exist in various places receive the discovery signal.

### <Step 500>

In step 500 of Fig. 13, the user apparatus UE-A receives a discovery signal from another user apparatus UE, and detects that communication is available between the own area and another area by detecting that an area ID included in the discovery signal is different from its own area ID. That is, the user apparatus UE-A detects that the areas are coupled.

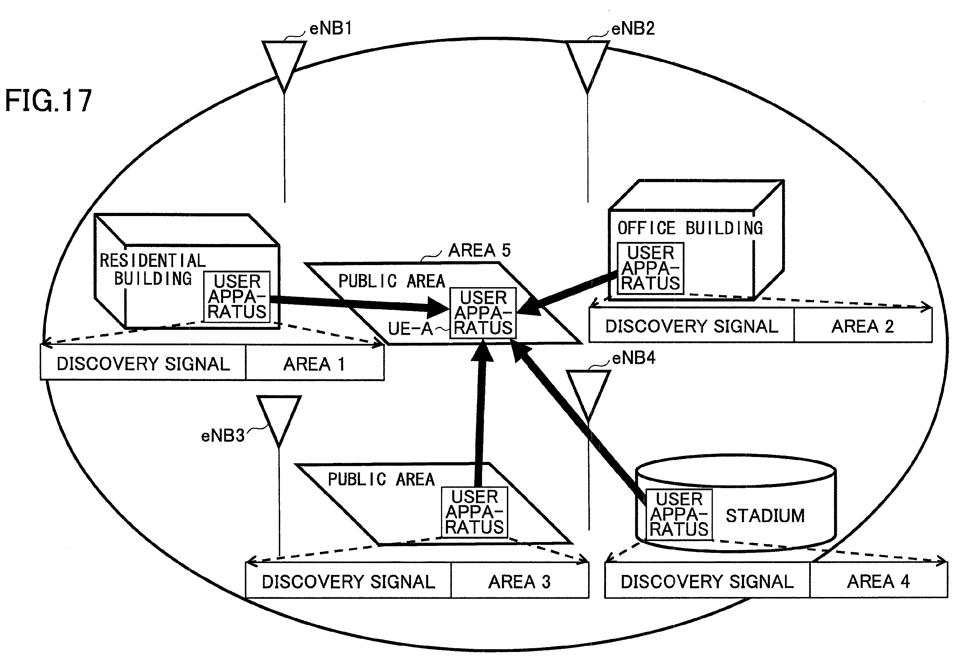

Fig. 17 shows a concrete example of step 500. In the example of Fig. 17, the user apparatus UE-A of a public area of an area ID of area 5 receives a discovery signal including an area ID from each of a plurality of user apparatuses of different areas. When the user apparatus UE-A can decode an area ID included in the discovery signal and when the area ID is different from its own ID, the user apparatus UE-A determines that an area of the area ID is coupled with an area of the own area ID (communication is available). It is not necessarily essential for the user apparatus UE-A to perform this determination, and it is enough that only the base station eNB performs the determination.

That the area ID of the discovery signal can be decoded means that RSSI (Received Signal Strength Indicator, received signal strength) of the received discovery signal is greater than a predetermined threshold. In the method of the present embodiment, accurate spatial coupling information based on received signal strength can be obtained without measuring nor estimating received signal strength between areas.

### <Step 600>

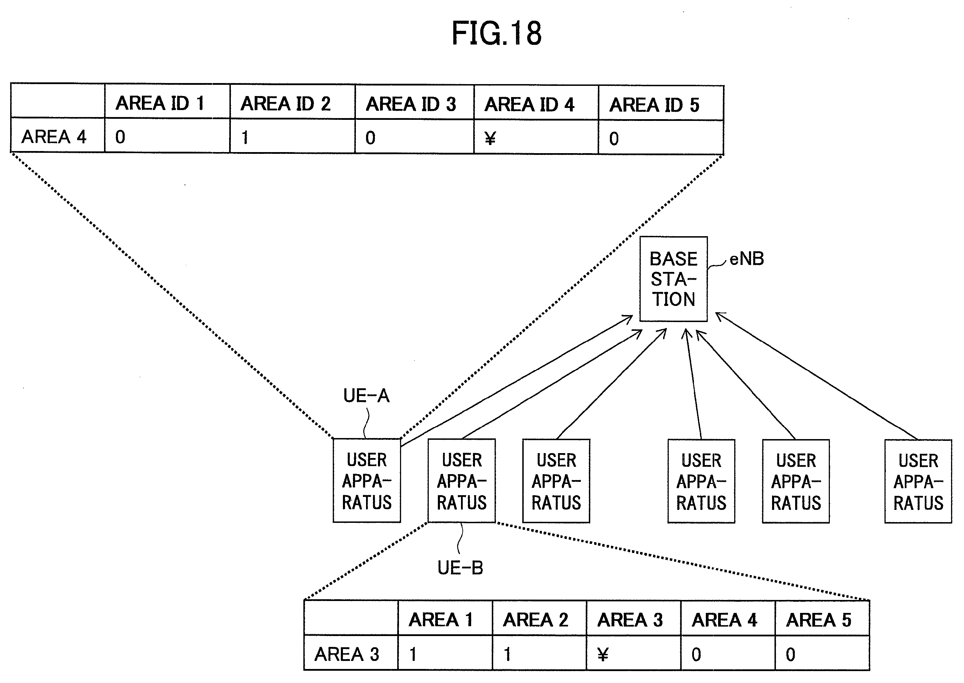

The user apparatus UE-A reports, to the base station eNB, spatial coupling information (its own area ID and an area ID of another area included in the discovery signal). As described before, it is not essential to report its own area ID. For the reporting, a user apparatus UE specific uplink signaling channel such as PUSCH, PUCCH and the like is used, for example. An example where the user apparatus UE reports spatial coupling information to the base station eNB is shown in Fig. 18.

Fig. 18 shows an example of spatial coupling information. The spatial coupling information shown in Fig. 18 includes the own area ID (example: area 4) and a 2xN (N is the number of area IDs) matrix. In the 2xN matrix, for each area ID, 1 is set when the user apparatus UE-A receives a discovery signal from a user apparatus UE of an area of the area ID, and 0 is set when the user apparatus UE-A does not receive the discovery signal. Also, as spatial coupling information, its own area ID and an area ID included in a discovery signal received from an area other than the own area may be transmitted.

### <Step 700>

In step 700 of Fig. 13, the base station eNB updates the spatial coupling matrix (example: Fig. 12(a)) based on the received spatial coupling information, updates resource assignment for each user apparatus UE, and reports the updated resource assignment. Reporting of the resource assignment is performed by, for example, user apparatus UE specific downlink signaling such as downlink RRC signaling.

### <Step 800>

The base station eNB exchanges the spatial coupling matrix with surrounding base stations eNB by the X2 interface so as to obtain more accurate spatial coupling matrix.

### (Apparatus configuration)

### <Configuration example of user apparatus UE>

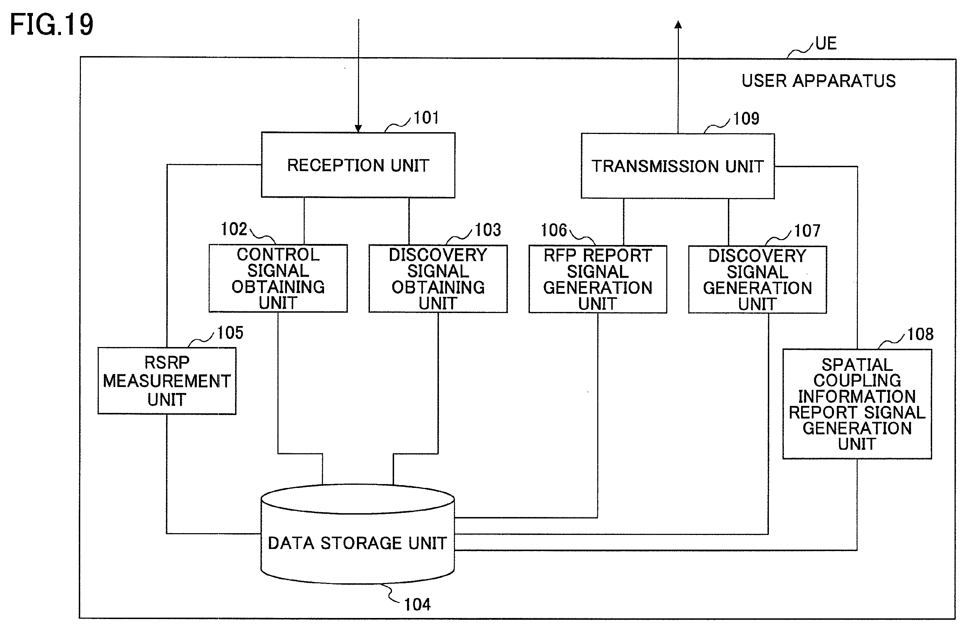

Fig. 19 shows a functional configuration example of a user apparatus UE in the present embodiment. Fig. 19 shows a configuration related to the present embodiment, and the user apparatus UE includes existing functions, not shown in the figure, for performing operation as a mobile terminal complying with LTE, for example.

As shown in Fig. 19, the user apparatus includes a reception unit 101, a control signal obtaining unit 102, a discovery signal obtaining unit 103, a data storage unit 104, an RSRP measurement unit 105, an RFP report signal generation unit 106, a discovery signal generation unit 107, a spatial coupling information report signal generation unit 108, and a transmission unit 109.

The reception unit 101 receives a signal by radio from a base station eNB or another user apparatus UE. The control signal obtaining unit 102 obtains a control signal (example: UE specific downlink signaling signal) from a signal received by the reception unit 101, obtains an area ID, a resource ID, a cell ID and the like from the control signal, and stores them in the data storage unit 104.

The discovery signal obtaining unit 103 obtains a discovery signal from a received signal, extracts (decodes) an area ID included in the discovery signal, and stores it in the data storage unit 104. Also, the RSRP measurement unit 105 measures RSRP of a reference signal received by the reception unit 101, and stores the measured RSRP in the data storage unit 104 by associating the measured RSRP with the cell ID.

The RFP report signal generation unit 106 generates a report signal (control signal) including an RFP (RSRP vector) by using cell IDs and RSRPs stored in the data storage unit 104. The discovery signal generation unit 107 generates a discovery signal including an area ID of the own area stored in the data storage unit 104. The spatial coupling information report signal generation unit 108 generates spatial coupling information including an area ID included in the received discovery signal and the own area ID that are stored in the data storage unit 104, and generates a report signal including the spatial coupling information. The own area ID may not be included in the spatial coupling information. The transmission unit 109 transmits a signal generated by the RFP report signal generation unit 106, the discovery signal generation unit 107, and the spatial coupling information report signal generation unit 108. When transmitting a discovery signal, the transmission unit 109 performs transmission by using a resource corresponding to a resource ID specified from the base station eNB.

The configuration of the user apparatus UE is not limited to the above-mentioned configuration. Any configuration can be adopted as long as the configuration can execute processes described in the present embodiment. For example, the user apparatus UE is configured as a user apparatus including a function configured to perform device-to-device communication by radio, including:
a data storage unit configured to store identification information corresponding to the user apparatus;
an identification information obtaining unit configured to receive, from another user apparatus, a discovery signal including identification information corresponding to the other user apparatus, and to obtain the identification information corresponding to the other user apparatus from the discovery signal; and
a control signal transmission unit configured to transmit a control signal including the identification information corresponding to the other user apparatus to a base station.

For example, the identification information corresponding to the user apparatus is area identification information identifying an area where the user apparatus exists, and the identification information corresponding to the other user apparatus is area identification information identifying an area where the other user apparatus exists. According to the configuration, the base station can obtain information used for determining communication availability between areas, for example. Thus, spatial reuse of resources can be properly performed in resource assignment for terminal-to-terminal communication.

Also, the control signal may include the identification information corresponding to the user apparatus and the identification information corresponding to the other user apparatus. Also, the user apparatus may include a discovery signal transmission unit configured to transmit a discovery signal including the identification information corresponding to the user apparatus.

Also, the user apparatus UE may be configured as a user apparatus including a function configured to perform device-to-device communication by radio, including:
a data storage unit configured to store area identification information identifying an area where the user apparatus exists;
an area identification information obtaining unit configured to receive, from another user apparatus, a discovery signal including area identification information of the other user apparatus, and to obtain the area identification information of the other user apparatus from the discovery signal; and
a control signal transmission unit configured to transmit, to a base station, a control signal including the area identification information of the user apparatus and the area identification information of the other user apparatus.

According to the above configuration, the base station can determine communication availability between areas by using the area identification information of the user apparatus and the area identification information of the other user apparatus. Thus, spatial reuse of resources can be properly performed in resource assignment for terminal-to-terminal communication.

The area identification information is not limited to particular one. It may be an area ID determined from RFP as described in the present embodiment. Or, it may be an ID identifying a cell (an example of area) such as an cell ID.

The user apparatus may include a discovery signal transmission unit configured to transmit a discovery signal including the area identification information of the user apparatus. Also, the area identification information of the user apparatus may be determined, by the base station, from information on a position of the user apparatus, and the user apparatus may receive the area identification information from the base station. The information on a position is RFP, for example. Also, the information on a position may be information obtained by GPS.

By adopting the above-mentioned configuration, the user apparatus can obtain area identification information easily.

The user apparatus may be provided with an information transmission unit configured to measure, for each base station, received power of a signal received from a plurality of base stations, and to transmit, to the base station, the received power of the plurality of base stations as the information on a position of the user apparatus. According to this configuration, the information on a position can be reported without using GPS.

The base station may determine availability of discovery signal communication between areas according to information including area identification information of the user apparatus and area identification information of the other user apparatus so as to assign a resource for discovery signal transmission based on the availability of discovery signal communication between areas. The user apparatus may transmit the discovery signal using the resource. By such a configuration, for example, the base station can properly perform spatial reuse of resources, and collision of discovery signals in user apparatuses can be reduced, and resource use efficiency can be improved.

### <Configuration example of base station eNB>

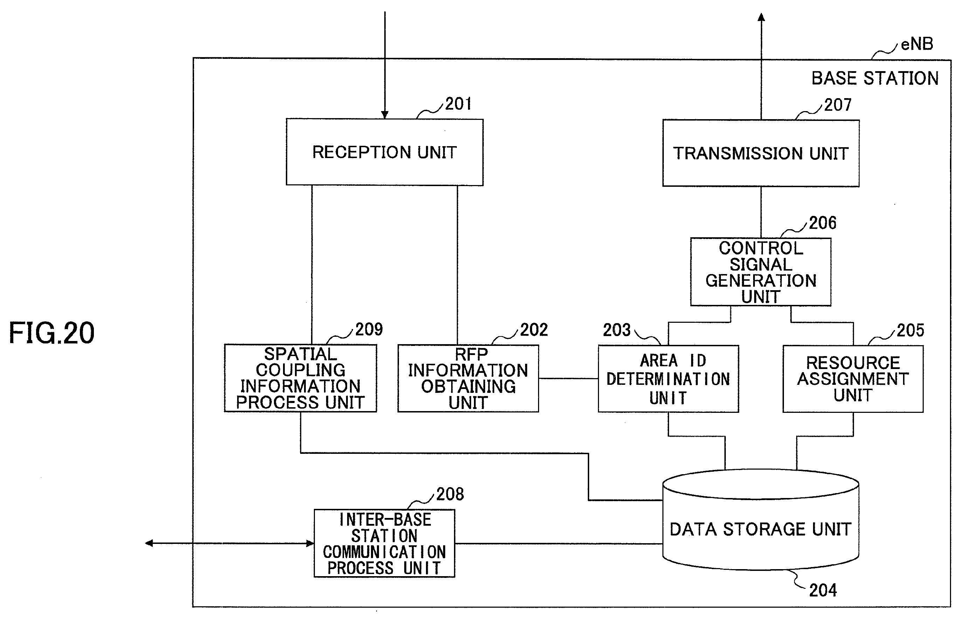

Fig. 20 shows a functional configuration example of a base station eNB in the present embodiment. Fig. 20 shows a configuration related to the present embodiment, and the base station eNB includes existing functions, not shown in the figure, for performing operation as a base station eNB complying with LTE, for example.

As shown in Fig. 20, the base station eNB includes a reception unit 201, an RFP information obtaining unit 202, an area ID determination unit 203, a data storage unit 204, a resource assignment unit 205, a control signal generation unit 206, a transmission unit 207, an inter-base station communication processing unit 208 and a spatial coupling information processing unit 209.

The data storage unit 204 stores an RFP· area mapping table, a spatial coupling matrix, a table in which a user apparatus UE, an area ID, and an assigned resource ID are associated with each other, and free resource information and the like.

The reception unit 201 receives a signal transmitted from a user apparatus UE by radio. The RFP information obtaining unit 202 obtains RFP from a signal received from a user apparatus UE, and passes the RFP to the area ID determination unit 203. The area ID determination unit 203 compares the received RFP (each RSRP value) with entries stored in the RFP·area mapping table to determine an area ID corresponding to the RFP and to add an entry to the RFP·area mapping table and the like.

The resource assignment unit 205 assigns a resource to the user apparatus UE based on the spatial coupling matrix, an area ID of the user apparatus UE, already assigned resources, unassigned resources and the like.

The spatial coupling information processing unit 209 obtains spatial coupling information from a signal received by the reception unit 201, and generates/updates a spatial coupling matrix by using the spatial coupling information. The control signal generation unit 206 generates a control information including an area ID and a resource ID and the like. The transmission unit 207 transmits a control signal, a reference signal or the like to the user apparatus UE by radio.

The inter-base station communication processing unit 208 exchanges information such as the RFP·area mapping table, the spatial coupling matrix and the like with other base stations by performing inter-base station communication by using an X2 interface, for example, and updates the RFP· area mapping table, and the spatial coupling matrix and the like that are stored in the data storage unit 204 by using an RFP·area mapping table, and a spatial coupling matrix and the like received from other base stations.

The configuration of the base station eNB is not limited to the above-mentioned configuration. Any configuration can be adopted as long as the configuration can execute processes described in the present embodiment. For example, the base station eNB is configured as a base station configured to communicate with a user apparatus that includes a function configured to perform device-to-device communication by radio, including:
a spatial coupling information reception unit configured to receive, from each user apparatus of a plurality of user apparatuses, spatial coupling information including identification information that is included in a discovery signal received by the user apparatus and that corresponds to another user apparatus; and
a resource assignment unit configured to determine availability of discovery signal communication between areas where user apparatuses exist based on the spatial coupling information, and to assign a resource for discovery signal transmission to a user apparatus based on the availability of discovery signal communication.

Also, the base station may include an identification information transmission unit configured to receive, from each user apparatus of the plurality of user apparatuses, information on a position of the user apparatus, to determine identification information corresponding to each user apparatus based on the information on the position, and to transmit the identification information to the user apparatus. According to this configuration, the user apparatus can receive identification information corresponding to the user apparatus by a signaling from the base station. The identification information corresponding to the user apparatus may be, for example, area identification information identifying an area where the user apparatus exists.

Also, the base station eNB may be configured as a base station configured to communicate with a user apparatus that includes a function configured to perform device-to-device communication by radio, including:
a spatial coupling information reception unit configured to receive, from each user apparatus of a plurality of user apparatuses, spatial coupling information including area identification information of the user apparatus and area identification information that is included in a discovery signal received by the user apparatus; and
a resource assignment unit configured to determine availability of discovery signal communication between areas where user apparatuses exist based on the spatial coupling information, and to assign a resource for discovery signal transmission to a user apparatus based on the availability of discovery signal communication.

Also, the base station may include an area identification information transmission unit configured to receive, for each user apparatus of the plurality of user apparatuses, information on a position of the user apparatus, to determine area identification information of each user apparatus based on the information on the position, and to transmit the area identification information to the user apparatus. According to this configuration, the user apparatus can obtain area identification information of the user apparatus by a signaling from the base station.

The information on a positon of the user apparatus may be, for example, information of received power on a plurality of base stations. According to this configuration, the base station can obtain information on a position without using GPS by the user apparatus. However, the user apparatus may use GPS for the base station to obtain the information on a position.

In the above, the present invention has been explained while referring to the specific embodiments. However, the disclosed invention is not limited to the embodiments. Those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary. Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the user apparatus and the base station have been explained by using functional block diagrams. However, each apparatus may be implemented in hardware, software, or a combination thereof. The software that operates operation corresponding to processes described in the embodiment of the present invention, that is, software executed by a processor provided in the user apparatus, and software executed by a processor provided in the base station may be stored respectively in any proper storage medium such as a RAM (Random Access Memory), a flash memory, a ROM (Read Only Memory), an EPROM, an EEPROM, a register, a hard disk (HDD), a removable disk, a CD-ROM, a database, a server and the like.

The present invention is not limited to the above-mentioned embodiment and is intended to include various variations, modifications, alterations, substitutions and so on without departing from the spirit of the present invention.

The present international application claims priority based on Japanese patent application No. 2013-184950, filed in the JPO on September 6, 2013, and Japanese patent application No. 2013-256309, filed in the JPO on December 11, 2013, and the entire contents of the Japanese patent application No. 2013-184950 and Japanese patent application No. 2013-256309 are incorporated herein by reference.

### DESCRIPTION OF REFERENCE SIGNS

UE user apparatus
eNB base station
101 reception unit
102 control signal obtaining unit
103 discovery signal obtaining unit
104 data storage unit
105 RSRP measurement unit
106 RFP report signal generation unit
107 discovery signal generation unit
108 spatial coupling information report signal generation unit
109 transmission unit
201 reception unit
202 RFP information obtaining unit
203 area ID determination unit
204 data storage unit
205 resource assignment unit
206 control signal generation unit
207 transmission unit
208 inter-base station communication processing unit
209 spatial coupling information processing unit

## Claims

1. A user apparatus including a function configured to perform device-to-device communication by radio, comprising:
a data storage unit configured to store identification information corresponding to the user apparatus;
an identification information obtaining unit configured to receive, from another user apparatus, a discovery signal including identification information corresponding to the other user apparatus, and to obtain the identification information corresponding to the other user apparatus from the discovery signal; and
a control signal transmission unit configured to transmit a control signal including the identification information corresponding to the other user apparatus to a base station.

2. The user apparatus as claimed in claim 1, wherein the identification information is area identification information.

3. The user apparatus as claimed in claim 2, wherein the identification information corresponding to the user apparatus is area identification information identifying an area where the user apparatus exists, and the identification information corresponding to the other user apparatus is area identification information identifying an area where the other user apparatus exists.

4. The user apparatus as claimed in any one of claims 1-3, wherein the control signal includes the identification information corresponding to the user apparatus and the identification information corresponding to the other user apparatus.

5. The user apparatus as claimed in any one of claims 1-4, comprising a discovery signal transmission unit configured to transmit a discovery signal including the identification information corresponding to the user apparatus.

6. A base station configured to communicate with a user apparatus that includes a function configured to perform device-to-device communication by radio, comprising:
a spatial coupling information reception unit configured to receive, from each user apparatus of a plurality of user apparatuses, spatial coupling information including identification information that is included in a discovery signal received by the user apparatus and that corresponds to another user apparatus; and
a resource assignment unit configured to determine availability of discovery signal communication between areas where user apparatuses exist based on the spatial coupling information, and to assign a resource for discovery signal transmission to a user apparatus based on the availability of discovery signal communication.

7. The base station as claimed in claim 6, comprising an identification information transmission unit configured to receive, from each user apparatus of the plurality of user apparatuses, information on a position of the user apparatus, to determine identification information corresponding to each user apparatus based on the information on the position, and to transmit the identification information to the user apparatus.

8. The base station as claimed in claim 6 or 7, wherein the identification information corresponding to the user apparatus is area identification information identifying an area where the user apparatus exists.

9. An information notification method executed by a user apparatus including a function configured to perform device-to-device communication by radio, comprising:
an identification information obtaining step of receiving, from another user apparatus, a discovery signal including identification information corresponding to the other user apparatus, and obtaining the identification information corresponding to the other user apparatus from the discovery signal; and
a control signal transmission step of transmitting a control signal including the identification information corresponding to the other user apparatus to a base station.

10. A resource assignment method executed by a base station configured to communicate with a user apparatus that includes a function configured to perform device-to-device communication by radio, comprising:
a spatial coupling information reception step of receiving, from each user apparatus of a plurality of user apparatuses, spatial coupling information including identification information that is included in a discovery signal received by the user apparatus and that corresponds to another user apparatus; and
a resource assignment step of determining availability of discovery signal communication between areas where user apparatuses exist based on the spatial coupling information, and assigning a resource for discovery signal transmission to a user apparatus based on the availability of discovery signal communication.
